# EUROPEAN PATENT APPLICATION

(11) **EP 3 247 095 A1**
(43) Date of publication of application: **22.11.2017**
(21) Application number: 17171927.1
(22) Date of filing: 19.05.2017
(51) Int. Cl.: H04M 3/42, H04L 12/58, H04M 1/64, H04M 3/50, H04M 3/38, H04M 3/527, H04M 3/533

(54) **METHOD, APPARATUS, AND PORTABLE ELECTRONIC DEVICE**

(30) Priority: 20.05.2016 CN 201610344873
(71) Applicant: Huawei Technologies Co., Ltd., Longgang District Shenzhen, Guangdong 518129 (CN)
(72) Inventor: WANG, Yahui, Shenzhen, Guangdong 518129, P.R. (CN); LI, Xiaojuan, Shenzhen, Guangdong 518129, P.R. (CN); GAO, Wenmei, Shenzhen, Guangdong 518129, P.R. (CN)
(74) Representative: Gill Jennings & Every LLP

(57) **Abstract**

This application discloses a method, an apparatus, and a portable electronic device. The method includes: detecting an incoming phone call; automatically answering the phone call; determining that in at least one pre-stored event, there is an event matching a telephone number of the phone call, where the event includes: at least one of content of the event, a starting time of the event, or a location of the event, contact information of a participant, and permission of the participant; and the contact information of participant includes a telephone number; obtaining and parsing audio content of the phone call; and automatically answering the telephone call according to the audio content and permission that corresponds to the telephone number of the phone call. The method provided in this application has an advantage of effective privacy protection.

## Description

### TECHNICAL FIELD

The present invention relates to the communications field, and in particular, to a method, an apparatus, and a portable electronic device.

### BACKGROUND

A user of a portable electronic device and especially a user of a mobile phone usually cannot answer a call, or reply to a short message service message, an instant message, or an email in time because the user is busy or due to another reason. A communication initiator may have something urgent needing to be confirmed or may need help, or may worry about safety of a called party. When seeing a missed call, a short message service message that is not replied to, an instant message that is not replied to, or an email that is not replied to, a communication receiver usually replies to the communication initiator to ask what the matter is.

As voice assistants such as Siri, Cortana, and Google Now become more intelligent, the voice assistants may serve as a personal assistant of a user to implement intelligently questioning and responding, so that it becomes possible that the voice assistants help the user automatically process a call, a short message service message, an email, and an instant message. The prior art provides a method for intelligently processing a call. In the method, a call may be parsed to obtain a keyword of content of the call, and a specific reply may be made according to the keyword of the content of the call.

In a solution for implementing the prior art, it is found that the prior art has the following technical problem:
The technical solution provided in the prior art is a fixed mode, that is, the prior art cannot dynamically adjust, according to a current contact, permission of the contact. Therefore, in the solution of the prior art, privacy or information cannot be effectively protected.

### SUMMARY

A technical problem to be resolved in embodiments of the present invention is to provide a method applied to a portable electronic device, to resolve a problem in the prior art that privacy or information cannot be effectively protected.

A first aspect provides a method, where the method is applied to a portable electronic device, and the method includes: detecting an incoming phone call; automatically answering the phone call; determining that in at least one pre-stored event, there is an event matching a telephone number of the phone call, where the event may include: at least one of content of the event, a starting time of the event, or a location of the event, contact information of a participant, and permission of the participant; and the contact information of the participant includes a telephone number; obtaining and parsing audio content of the phone call; and automatically responding to the audio content with response content according to the audio content and permission that corresponds to the telephone number of the phone call.

According to the method provided in the first aspect, a telephone call may be automatically answered, a telephone number is matched with a pre-stored event, and after the matching, response content for audio content is automatically responded with according to the audio content and permission that corresponds to the telephone number. In this method, content to which permission is granted is automatically responded with, and content to which permission is not granted is not automatically responded with. Therefore, user privacy can be effectively protected.

In a possible design, the method may further include: determining that in the at least one pre-stored event, there is no event matching the telephone number of the phone call; and automatically responding with preset content.

By means of the possible design, auto-response can be implemented when no event matches the telephone number of the phone call, thereby ensuring completeness of the solution.

In another possible design, the permission of the participant includes at least one of obtaining a type of information, obtaining content of information, or obtaining a range of information.

A specific manifestation of setting the permission of the participant may more specifically limit content that is automatically responded with, thereby further protecting user privacy.

In still another possible design, the automatically responding to the audio content with response content according to the audio content and permission that corresponds to the telephone number of the telephone call may include: determining a participant at least according to a mapping relationship between the telephone number of the telephone call and the contact information of the participant, and determining permission of the participant according to a mapping relationship between the participant and the permission of the participant; determining the response content for the audio content; and determining that the response content satisfies the permission of the participant, and automatically responding with the response content; or determining that the response content does not satisfy the permission of the participant, automatically responding with the preset content.

In the still another possible design, an implementation solution of auto-response with dynamic permission is provided.

In yet another possible design, the automatically responding to the audio content with response content according to the audio content and permission that corresponds to the telephone number of the telephone call may include: determining a participant at least according to a mapping relationship between the telephone number of the telephone call and the contact information of the participant, and determining permission of the participant according to a mapping relationship between the participant and the permission of the participant; and determining that a response type of the audio content satisfies the permission of the participant, and automatically responding to the telephone call with the response content; or determining that a response type does not satisfy the permission of the participant, and automatically responding with the preset content.

In the yet another possible design, an implementation solution of auto-response with dynamic permission is provided.

In still yet another possible design, the contact information of the participant further includes: voiceprint information.

In a further possible design, the contact information of the participant further includes: voiceprint information, and the determining a participant at least according to a mapping relationship between the telephone number of the telephone call and the contact information of the participant includes: determining the participant according to a mapping relationship among the telephone number of the phone call, the voiceprint information in the audio content of the phone call, and the contact information of the participant. The voiceprint information is added, so that a phenomenon that information is stolen due to malicious phone theft or due to a call made by using a stolen subscriber identification module card can be effectively avoided.

In an additional possible design, an implementation solution of auto-response with dynamic permission is provided.

A second aspect provides a method, where the method is applied to a portable electronic device, and the method includes: detecting an incoming phone call; determining that in at least one pre-stored event, there is an event matching a telephone number of the phone call, where the event may include: at least one of content of the event, a starting time of the event, or a location of the event, contact information of a participant, and permission of the participant; and the contact information of the participant includes a telephone number; automatically answering the phone call; obtaining and parsing audio content of the phone call; and automatically responding to the audio content with response content according to the audio content and permission that corresponds to the telephone number of the phone call.

According to the method provided in the second aspect, a telephone number is matched with a pre-stored event, and after the matching, a telephone call is automatically answered, and response content for audio content is automatically responded with according to permission corresponding to the telephone number. In the method provided in the second aspect, there is a precondition for auto-reply, content to which permission is granted is automatically responded with, and content to which permission is not granted is not automatically responded with. Therefore, user privacy can be effectively protected.

In a possible design, the method may further include: before automatically answering the phone call, determining that ringing duration exceeds a preset time or the telephone call is from a particular contact.

In the possible design, a precondition may be set for auto answer, thereby ensuring reliability of the solution.

In another possible design, the permission of the participant includes at least one of obtaining a type of information, obtaining content of information, or obtaining a range of information.

A specific manifestation of setting the permission of the participant may more specifically limit content that is automatically responded with, thereby further protecting user privacy.

In still another possible design, automatically responding to the telephone call according to the permission corresponding to the telephone number of the telephone call may include: determining a participant at least according to a mapping relationship between the telephone number of the telephone call and the contact information of the participant, and determining permission of the participant according to a mapping relationship between the participant and the permission of the participant; determining the response content for the audio content; and determining that the response content satisfies the permission of the participant, and automatically responding with the response content; or determining that the response content does not satisfy the permission of the participant, automatically responding with the preset content.

In the still another possible design, an implementation solution of auto-response with dynamic permission is provided.

In yet another possible design, automatically responding to the telephone call according to the permission corresponding to the telephone number of the telephone call may include: determining a participant at least according to a mapping relationship between the telephone number of the telephone call and the contact information of the participant, and determining permission of the participant according to a mapping relationship between the participant and the permission of the participant; and determining that a response type of the audio content satisfies the permission of the participant, and automatically responding to the audio content with the response content; or determining that a response type does not satisfy the permission of the participant, and automatically responding with the preset content.

A third aspect provides a method, where the method is applied to a portable electronic device, and the method includes: receiving a message of an application, where the application includes one of a short message service, instant messaging, or an email; obtaining information about the message, where the information includes content of the message, and a telephone number or an account for sending the message; determining, according to the information, that in at least one pre-stored event, there is an event matching the telephone number or the account of the message, where the event includes: at least one of a telephone number of a participant or an account of a participant, at least one of a starting time of the event or a location of the event, content of the event, and permission of a participant; and automatically replying to the message according to permission corresponding to the telephone number or the account of the message, and according to the information.

According to the method provided in the third aspect, an account or a telephone number in a message may be matched with an event, so that the message is automatically replied to according to permission of a participant, and content to which permission is not granted is not automatically replied with, thereby effectively protecting user privacy.

In a possible design, determining that in the at least one pre-stored event, there is no event matching the telephone number or the account of the message; and automatically replying with preset content or skipping replying to the message.

A processing solution is set when the telephone number or the account does not match an event, so that completeness of the method is ensured.

In another possible design, the permission of the participant may include at least one of obtaining a type of information, obtaining content of information, or obtaining a range of information.

In yet another possible design, the automatically replying to the message according to permission corresponding to the telephone number or the account of the message, and according to the information may include: determining the permission corresponding to the telephone number or the account of the message, according to a mapping relationship between the telephone number or the account of the message and the permission of the participant; and determining that reply content for the message satisfies the permission corresponding to the telephone number or the account of the message, and automatically replying with the reply content; or determining that the reply content does not satisfy the permission corresponding to the telephone number or the account of the message, and automatically replying with preset content or skipping replying to the message.

In still another possible design, the automatically replying to the message according to permission corresponding to the telephone number or the account of the message, and according to the information may include: determining the permission corresponding to the telephone number or the account of the message, according to a mapping relationship between the telephone number or the account of the message and the permission of the participant; and determining that a reply type of the message satisfies the permission corresponding to the telephone number or the account of the message, and automatically replying with reply content for the message; or determining that a reply type does not satisfy the permission corresponding to the telephone number or the account of the message, and automatically replying with preset content or skipping replying to the message.

The still another specific implementation solution of automatically replying to a message is provided, to support implementation of automatically replying to the message.

A fourth aspect provides a portable electronic device, where the portable electronic device includes a detector and a processor, the detector and the processor may be replaced with units or modules, and the detector is configured to detect an incoming phone call; and the processor is configured to execute the method according to the first aspect or the possible designs of the first aspect, or execute the method according to the second aspect or the possible designs of the second aspect. A fifth aspect provides a portable electronic device, where the portable electronic device includes a unit and/or a module that is configured to execute the notification output method according to the first aspect or the optional manners of the first aspect, and the unit and/or the module are logical divisions of the portable electronic device for executing the notification output method according to the first aspect or the optional manners of the first aspect.

A sixth aspect provides a portable electronic device, where the portable electronic device includes a unit and/or a module, configured to execute the notification output method according to the second aspect or the optional manners of the second aspect, and the unit and/or the module are logical divisions of the portable electronic device for executing the notification output method according to the second aspect or the optional manners of the second aspect.

A seventh aspect provides a portable electronic device, where the portable electronic device includes: a transceiver and a processor, and the transceiver and the processor may be replaced with units or modules; the transceiver is configured to receive a message of an application, where the application includes one of a short message service, instant messaging, or an email; and the processor is configured to execute the method according to the third aspect and the possible designs of the third aspect.

An eighth aspect provides a portable electronic device, where the portable electronic device includes a unit and/or a module, configured to execute the notification output method according to the third aspect or the optional manners of the third aspect, and the unit and/or the module are logical divisions of the portable electronic device for executing the notification output method according to the third aspect or the optional manners of the third aspect.

A ninth aspect provides a portable electronic device, including: one or more processors, a memory, a bus system, a transceiver, and one or more programs, where the processor, the memory, and the transceiver are connected by using the bus system; and the one or more programs are stored in the memory, the one or more programs include an instruction, and when the instruction is executed by the portable electronic device, the portable electronic device executes the method according to any one of the first aspect or all possible designs of the first aspect, or any one of the second aspect or all possible designs of the second aspect, or any one of the third aspect or all possible designs of the third aspect.

A tenth aspect provides a computer readable storage medium storing one or more programs, where the one or more programs include an instruction, and when the instruction is executed by a portable electronic device, the portable electronic device executes the method according to any one of the first aspect or all possible designs of the first aspect, or any one of the second aspect or all possible designs of the second aspect, or any one of the third aspect or all possible designs of the third aspect.

An eleventh aspect provides a graphical user interface on a portable electronic device, where the portable electronic device includes a display, a memory, multiple application programs, and one or more processors that are configured to execute one or more programs stored in the memory, the graphical user interface includes the user interface displayed in the method according to any one of the first aspect or all possible designs of the first aspect, or any one of the second aspect or all possible designs of the second aspect, or any one of the third aspect or all possible designs of the third aspect, and the display includes a touch-sensitive surface and a display screen.

For technical effects of the technical solutions according to the fourth aspect to the eleventh aspect, refer to the foregoing related descriptions, and details are not described herein again.

According to the technical solutions provided above, matching is performed between a telephone number or an account of a call or a information received by a portable electronic device and an event, if there is a corresponding event matching the telephone number or the account, the call is responded to with or the message is replied to with content satisfying permission corresponding to the telephone number or the account, according to the telephone number or the account. In the technical solutions, not only auto-response is implemented, but also user privacy is effectively protected. Because content that does not satisfy the permission is not replied with, the technical solutions have an advantage of effectively protecting user privacy.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a structural diagram of a portable electronic device according to an embodiment of this application;
FIG. 2A is a flowchart of a method according to another embodiment of this application;
FIG. 2B is a schematic diagram of an application interface for auto-response according to another embodiment of this application;
FIG. 2C is a schematic diagram of an event format according to another embodiment of this application;
FIG. 2D is a flowchart of a method according to still another embodiment of this application;
FIG. 3A is a schematic flowchart of a method according to yet another embodiment of this application;
FIG. 3B is a schematic diagram of an application interface for instant messaging according to yet another embodiment of this application;
FIG. 3C is a schematic diagram of an application interface for group chat according to yet another embodiment of this application; and
FIG. 4 is a structural diagram of a portable electronic device according to still yet another embodiment of this application.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

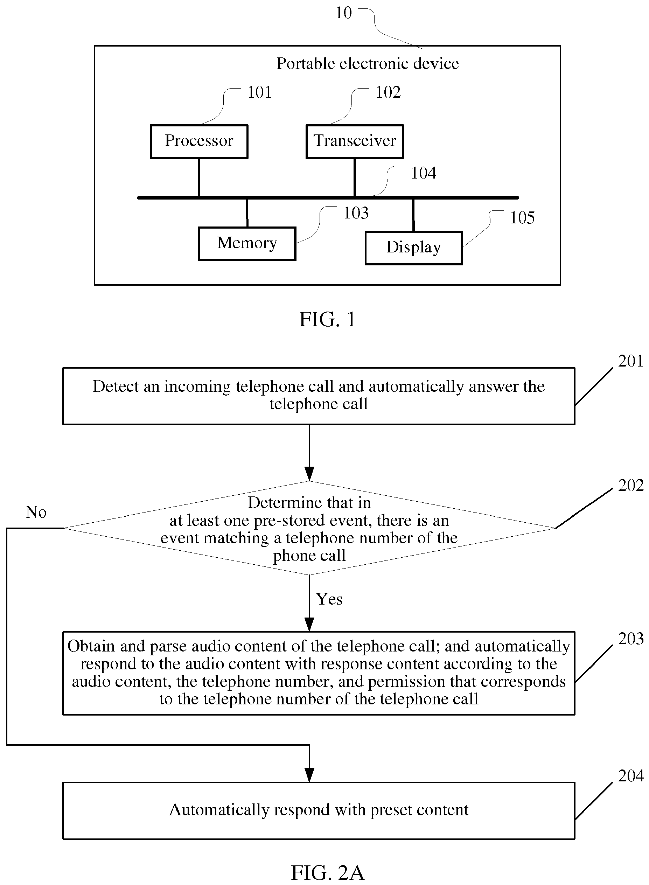

Unless otherwise specified, an application in specific implementation manners of this application may be short message service, instant messaging, email, or the like. A portable electronic device in this application includes, but is not limited to, an electronic device that is easy to carry, such as a mobile phone, a tablet computer, a notebook computer, a smartwatch, or a PDA. A voice assistant in specific embodiments of this application may include, but is not limited to, Siri, Cortana, and Google Now. Referring to FIG. 1, FIG. 1 is a structural diagram of a portable electronic device according to an embodiment of this application. A portable electronic device 10 may be an electronic device such as a mobile phone, a PDA (Chinese: personal digital assistant, English: Personal Digital Assistant), a tablet computer, or a smartwatch. As shown in FIG. 1, the portable electronic device 10 includes: a processor 101, a memory 102, a transceiver 103, a bus 104, and a display 105. The transceiver 103 is configured to receive data from and transmit data to an external device. There may be one or more processors 101 in the portable electronic device 10. In some embodiments of this application, the processor 101, the memory 102, the transceiver 103, and the display 105 may be connected by using a bus or in another form. The portable electronic device may automatically respond to an incoming call. The auto-response needs to be preset by a user, and a type of a message that is automatically replied to also needs to be set. For example, the portable electronic device automatically responds to a call. The user pre-creates or presets an event in a schedule, and a structure of the event may include content of the event, and a telephone number and/or another account of a participant, and may further include a name of the participant, and permission of the participant (the permission may be specifically at least one of a type, content, or a range of information that can be obtained by each participant).

The memory 102 stores program code. The processor 101 is configured to invoke the program code stored in the memory 102 to perform steps according to another embodiment or still another embodiment below. For specific steps, refer to descriptions of the another embodiment of this application or the still another embodiment of this application, and details are not described herein.

The display 105 may be a touch control display. The display 105 may display a user-operable graphical user interface. The display 105 may receive a touch control message that is sent by the user by using the graphical user interface and send the touch control message to the processor 101 for processing. The processor 101 may perform the steps in the another embodiment or the still another embodiment below according to the touch control message and the program code that is stored in the memory 102. For specific steps, refer to descriptions of the another embodiment of this application or the still another embodiment of this application, and details are not described herein.

Referring to FIG. 2A, FIG. 2A shows a method according to another embodiment of this application. The method is applied to the portable electronic device shown in FIG. 1. The portable electronic device 10 may automatically respond to an incoming phone call, and that the portable electronic device automatically responds to the incoming telephone call may be set by a user by using a graphical user interface displayed by the display 105. Certainly, in an actual application, that the portable electronic device automatically responds to the incoming telephone call may be implemented by the processor 101 by running application software. For example, the incoming telephone call is automatically responded to in a manner of running application software such as a voice assistant. The method is executed by the portable electronic device. As shown in FIG. 2A, the method includes the following steps.

Step 201: Detect an incoming telephone call and automatically answer the phone call.

In step 201, there may be multiple conditions for automatically answering the phone call. For example, the voice assistant is triggered to automatically answer the call. Certainly, the electronic device may be in a particular mode, and when a call is incoming, the call is automatically answered immediately. Alternatively, when a particular specified condition is reached and the user does not respond, the electronic device may enter an auto-response mode of the voice assistant. The specified condition includes, but is not limited to: time for which the electronic device rings before the call is answered. Certainly, the call may be answered automatically when the electronic device is in a conference mode or a silent mode.

Step 202: Determine that in at least one pre-stored event, there is an event matching a telephone number of the phone call, where the event may include: at least one of content of the event, a starting time of the event, or a location of the event, contact information of a participant, and permission of the participant.

The contact information of the participant may be specifically a telephone number of the participant. Certainly, the contact information of the participant may further include information such as a name of the participant.

The event in step 202 may be manually entered and stored by the user by using the graphical user interface displayed by the display. Certainly, in an actual application, the event may also be automatically generated by the portable electronic device. A specific implementation manner may be: obtaining context information stored in the portable electronic device; after parsing the context information, determining whether the context information satisfies a creation condition; if the creation condition is satisfied, creating an initial event, and enabling a confirmation message for the initial event to pop up; and when the user confirms the initial event, converting the initial event to the event and storing the event. The context information may be specifically a stored historical chat record, for example, a historical chat record of an instant messaging application. Certainly, the context information may be other context information, for example, a program that has context information such as a short message service message record, schedule information, memo information, a reminder, and email content. The creation condition may be specifically: parsing the context information to determine whether at least one of the content of the event, the starting time of the event, or the location of the event, and the participant can be obtained.

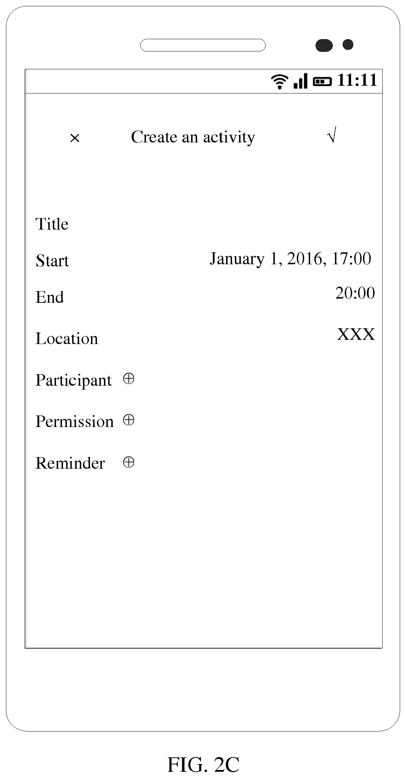

A structure of the event in step 202 may be a universal set of information types, for example, {a location, a participant, permission of the participant, a contact list, a calendar, a status, a starting time...}. A format of the event is shown in FIG. 2C. As shown in FIG. 2C, a type of the event may be: having a party, going hiking, having a meeting, or the like. The permission of the participant may be set according to different contacts. The permission of the participant may include: a location, a schedule, a contact, a communication manner, and the like. Certainly, the permission of the participant may be set to same permission by default. The content of the event in step 202 includes, but is not limited to, one or more of a theme of the event, a type of the event, or a description of the event. The content of the event is described by using an actual example. Using having a party as an example, the content of the event may include: the theme of the event: having a party, and the description of the event: attending a classmate party as required. The description of the event may be specifically a text or audio that describes the event. Certainly, in an actual application, another description manner may be used. The type of the event may be specifically a meeting, a dinner party, or karaoke. Certainly, in an actual application, the type of the event or the theme of the event may be manually entered by the user by using the graphical user interface displayed by the display, or may certainly be selected by the user by using a selection menu displayed on the graphical user interface. A specific manifestation or an obtaining form of the type of the event or the theme of the event is not limited in this application.

The permission of the participant in step 202 may specifically include: at least one of obtaining a type of information, obtaining content of the information, or obtaining a range of the information. Certainly, in an actual application, the permission of the participant may be the same, or may certainly be different. For example, in a specific event, permission of all participants may be the same, that is, all participants have permission to obtain same information from the portable electronic device. Certainly, in an actual application, the user may separately set the permission of the participants. For example, when the participant is a family member, the participant correspondingly has large participant permission, and when the participant is a stranger, the participant correspondingly has small participant permission.

Step 203: If it is determined that in the at least one pre-stored event, there is the event matching the telephone number of the phone call, obtain and parse audio content of the phone call; and automatically respond to the audio content with response content according to the audio content, the telephone number, and permission that corresponds to the telephone number.

An implementation method of step 203 may specifically include:
recording audio content of a caller, and parsing the audio content to learn a call demand; and
determining a participant at least according to a mapping relationship between the telephone number of the telephone call and the contact information of the participant, and determining permission of the participant according to the participant and the permission of the participant; and determining that a response type of the audio content satisfies the permission of the participant, and automatically responding to the audio content with the response content; or determining that the response type does not satisfy the permission of the participant, and automatically responding with the preset content.

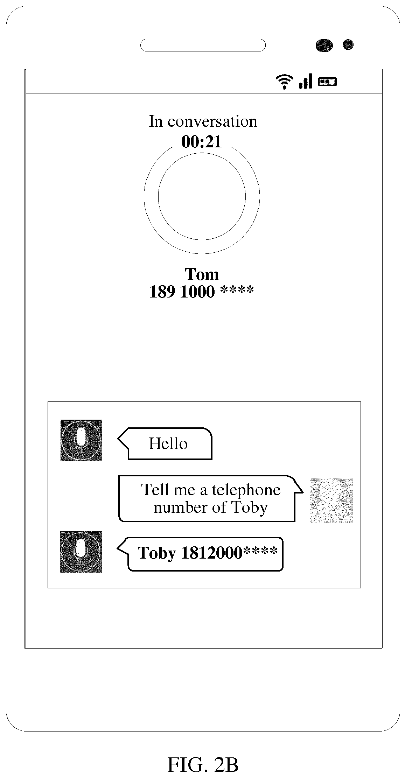

A specific implementation manner of determining whether the response type of the audio content satisfies the permission of the participant may be: parsing the audio content of the telephone call by using a natural language analysis processing algorithm to obtain the response type, and if the response type satisfies the permission of the participant and it is assumed that the permission of the participant is "contact" and the response type is "contact", obtaining the response content for the audio content, and automatically responding with the response content. As shown in FIG. 2B, the audio content of the telephone call is: Tell me a telephone number of Toby (for convenient description, a corresponding text of the audio content is recorded), the response content obtained after the parsing is "Toby 1812000****", and if the permission of the participant includes the contact, "Toby 1812000****" is automatically responded with.

An implementation method of step 203 may specifically include:
determining a participant at least according to a mapping relationship between the telephone number of the telephone calland the contact information of the participant, and determining permission of the participant according to the participant and the permission of the participant; determining the response content for the audio content; and determining that the response content satisfies the permission of the participant, and automatically responding with the response content; or determining that the response content does not satisfy the permission of the participant, automatically responding with the preset content.

A specific implementation manner of the determining that the response content satisfies the permission of the participant may be: parsing the audio content of the telephone call by using the natural language analysis processing algorithm to obtain the response content, and if the response content satisfies the permission of the participant, automatically responding with the response content. For example, as shown in FIG. 2B, content of the telephone call is: Tell me a telephone number of Toby, the response content obtained after the parsing is "Toby 1812000****", and if the permission of the participant includes the telephone number, "Toby 1812000****" is automatically responded with. Certainly, in an actual application, there may be multiple types of response content, for example, a location, an estimated time of arrival, and a current status. The algorithm for analyzing the audio content of the telephone call may be an algorithm such as named entity recognition or syntax parsing, or may certainly be another natural language analysis algorithm.

Step 204: If it is determined that in the at least one pre-stored event, there is no event matching the telephone number of the phone call, automatically respond with preset content.

There may be multiple types of preset content according to actual cases. For example, the preset content may be audio. Certainly, in an actual application, the preset content may be a text, for example, I am busy now, please leave a message. Certainly, the preset content may be another text. A specific form of the preset content is not limited in this application.

According to this solution, a telephone call is automatically responded to, it is determined in the auto-response whether response content satisfies permission of a participant, and when the response content satisfies the permission of the participant, the telephone call is automatically responded to with the response content, or when the response content does not satisfy the permission of the participant, the telephone call is automatically responded to with preset content, to automatically distinguish between permission of different participants, and provide different response content for the participants according to different permission, thereby effectively protecting user privacy.

Optionally, the contact information of the participant may further include: voiceprint information. When the voiceprint information is included, the determining a participant at least according to a mapping relationship between the telephone number of the telephone call and the contact information of the participant may be specifically: determining the participant according to a mapping relationship among the telephone number of the phone call, voiceprint information in the content of the phone call, and the contact information of the participant.

The determining the participant according to a mapping relationship among the telephone number of the phone call, voiceprint information in the content of the phone call, and the contact information of the participant may specifically include: matching voiceprint information in the audio content of the telephone call with voiceprint information in the contact information of the participant by using a voiceprint information matching algorithm, so as to determine whether the voiceprint information is from the participant.

In the voiceprint information matching solution, it can be determined whether a calling terminal is used by the participant, and when the voiceprint information is matched, it is determined that the calling terminal is used by the participant, and the response content satisfying the permission of the participant is provided, or when the voiceprint information is not matched, the preset content is automatically responded with.

According to the method provided in the another embodiment of this application, after an incoming telephone call is detected, a telephone number of the telephone call is matched with a pre-stored event, and if it is determined that the telephone number matches an event, the telephone call is automatically responded to according to permission corresponding to the telephone number. By means of the technical solution, the telephone call is automatically responded to, and different permission can be provided for different participants, so that a problem of dynamically adjusting permission of a participant is resolved, and user privacy is protected when auto-response is implemented.

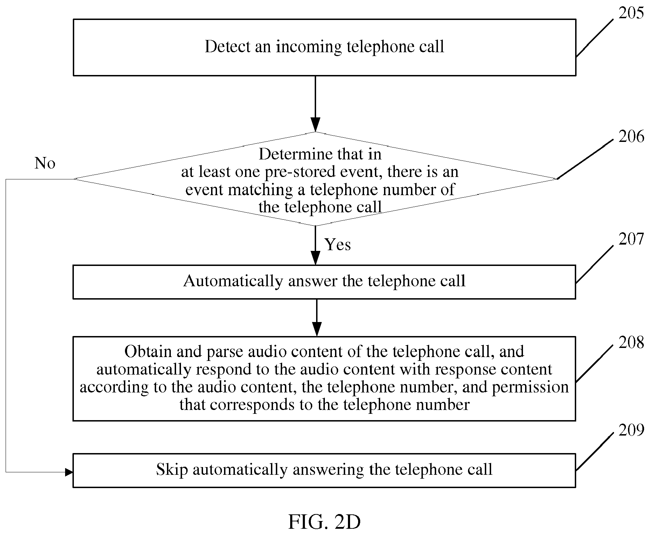

Referring to FIG. 2D, FIG. 2D shows a method according to another embodiment of this application. The method is applied to the portable electronic device shown in FIG. 1. The portable electronic device 10 may automatically respond to an incoming phone call, and that the portable electronic device automatically responds to the incoming telephone call may be set by a user by using a graphical user interface displayed by the display 105. Certainly, in an actual application, that the portable electronic device automatically responds to the incoming telephone call may be implemented by the processor 101 by running application software. For example, the incoming telephone call is automatically responded to in a manner of running application software such as a voice assistant. The method is executed by the portable electronic device. As shown in FIG. 2D, the method includes the following steps.

Step 205: Detect an incoming phone call.

Step 206: Determine that in at least one pre-stored event, there is an event matching a telephone number of the phone call, where the event may include: at least one of content of the event, a starting time of the event, or a location of the event, contact information of a participant, and permission of the participant.

For a specific implementation of step 206, refer to step 202.

Step 207: If it is determined that in the at least one pre-stored event, there is the event matching the telephone number of the phone call, automatically answer the phone call.

In step 207, there may be multiple conditions for automatically answering the phone call. The conditions may be, for example, determining that ringing duration exceeds a preset time, or the telephone call being from a particular contact. The conditions include, but are not limited to, automatically answering the call by triggering the voice assistant. Certainly, the electronic device may enter a particular mode, for example, a conference mode or a silent mode, and when a call is incoming, the call is automatically answered; or when a particular specified condition is reached and the user does not respond, the electronic device may enter an auto-response mode of the voice assistant.

Step 208: Obtain and parse audio content of the phone call, and automatically respond to the audio content with response content according to the audio content, the telephone number, and permission that corresponds to the telephone number.

For a specific implementation of step 208, refer to step 203.

Step 209: If it is determined that in the at least one pre-stored event, there is no event matching the telephone number of the phone call, skip automatically answering the phone call.

According to this solution, a telephone call is automatically responded to, the telephone call is automatically answered when a preset event is matched, it is determined in the auto-response whether response content satisfies permission of a participant, and when the response content satisfies the permission of the participant, the telephone call is automatically responded to with the response content, or when the response content does not satisfy the permission of the participant, the telephone call is automatically responded to with preset content, to distinguish between permission of different participants, provide different response content for the participants according to different permission, and effectively help a user process a call, thereby effectively protecting user privacy.

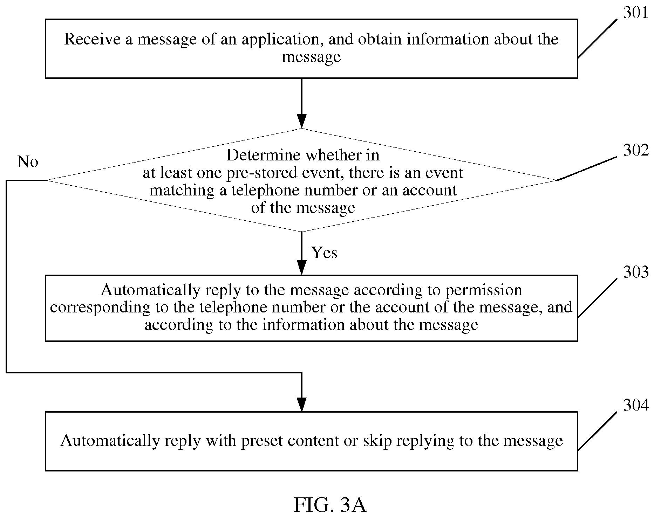

Referring to FIG. 3A, FIG. 3A is a method according to still another embodiment of this application. The method is applied to the portable electronic device shown in FIG. 1. The portable electronic device 10 may automatically reply to a message of an application, and the application includes, but is not limited to, one or more of short message service, instant messaging, or email. That the portable electronic device automatically replies to the application message may be set by a user by using a graphical user interface displayed by the display 105. The portable electronic device may automatically reply to a received message. Auto-reply to the message needs to be preset by the user, and a type of the message that is automatically replied to also needs to be set, for example, the portable electronic device automatically replies to a message of instant messaging (such as QQ and WeChat). The user pre-creates or presets an event in a schedule, and a structure of the event may include content of the event, and a telephone number and/or another account of a participant, and may further include a name of the participant, and permission of the participant (the permission may be specifically at least one of a type, content, or a range of information that can be obtained by each participant). That the portable electronic device automatically replies to the message of the application may further be implemented by the processor 101 by running application software. For example, the application message is automatically replied to in a manner of running application software such as a voice assistant. The type of the message of the application that is automatically replied to may be set by the user. For example, the user may set that the type of the message that is automatically replied to is only a message of an instant messaging application (such as QQ, WeChat, or Facebook). Certainly, the user may set a quantity of messages that are automatically replied to, for example, ten messages or less are automatically replied to each day. Certainly, in an actual application, auto-reply to the message may be set in another form. The method is executed by the portable electronic device. As shown in FIG. 3A, the method includes the following steps:
Step 301: Receive a message of an application, and obtain information about the message.

The information about the message in step 301 includes, but is not limited to, content of the message, and a telephone number or an account for sending the message.

The content of the message includes, but is not limited to, one or more of a theme of the message, a type of the message, or a description of the message.

Step 302: Determine whether in at least one pre-stored event, there is an event matching a telephone number or an account of the message, where the event includes: at least one of a telephone number of a participant or an account of a participant, at least one of a starting time of the event or a location of the event, content of the event, and permission of a participant.

For an event obtaining manner and the permission of the participant in step 302, refer to the description of step 202, and details are not described herein again.

Step 303: If it is determined that in the at least one pre-stored event, there is the event matching the telephone number or the account of the message, automatically reply to the message according to permission corresponding to the telephone number or the account of the message, and according to the information about the message.

The automatically replying to the message according to permission corresponding to the telephone number or the account of the message, and according to the information about the message in step 303 may specifically include:
determining the permission corresponding to the telephone number or the account of the message, according to a mapping relationship between the telephone number or the account of the message and the permission of the participant; and determining that a reply type of the message satisfies the permission corresponding to the telephone number or the account of the message, and automatically replying with reply content; or determining that the reply type does not satisfy the permission corresponding to the telephone number or the account of the message, and automatically replying with preset content or skipping replying to the message.

The automatically replying to the message according to permission corresponding to the telephone number or the account of the message, and according to the information about the message in step 303 may specifically include:
determining the permission corresponding to the telephone number or the account of the message, according to a mapping relationship between the telephone number or the account of the message and the permission of the participant; and determining that reply content for the message satisfies the permission corresponding to the telephone number or the account of the message, and automatically replying with the reply content; or determining that the reply content does not satisfy the permission corresponding to the telephone number or the account of the message, and automatically replying with preset content or skipping replying to the message.

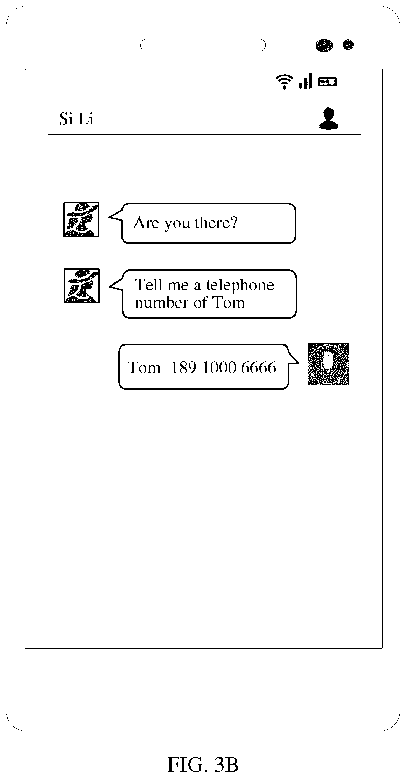

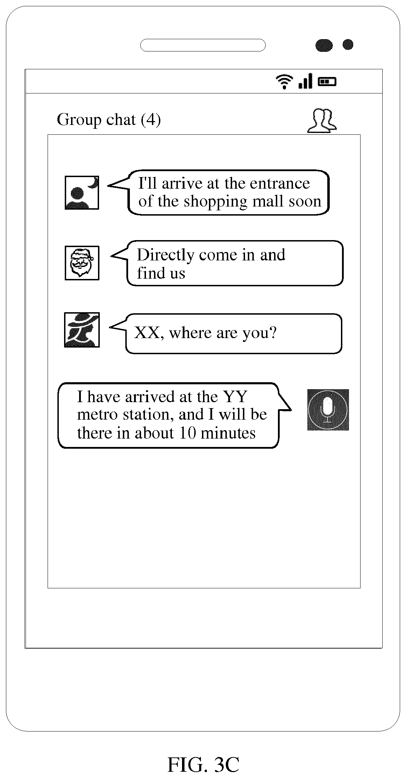

The reply content may be obtained by parsing the content of the message, and a specific implementation manner may be: parsing the content of the message by using a natural language analysis processing algorithm to obtain the reply content, and if the reply content satisfies the permission corresponding to the telephone number or the account of the message, automatically replying with the reply content. For example, using an instant messaging application as an example, as shown in FIG. 3B, content of information is: "Are you there? Tell me a telephone number of Tom", reply content that needs to be replied with after the parsing is: "Tom 18910006666", and if the permission of the participant includes contact information, "Tom 18910006666" is automatically replied with. Certainly, in an actual application, the message may further be sent or replied to in group chat, and the permission of the participant may be a location. As shown in FIG. 3C, the content of the information is: "XX, where are you now?", the reply content that needs to be replied with after the parsing is: "I have arrived at the YY metro station, and I will be there in about 10 minutes.". If the permission of the participant includes a location, "I have arrived at the YY metro station, and I will be there in about 10 minutes." is automatically replied with. The natural language analysis processing algorithm may be an algorithm such as named entity recognition or syntax parsing, or may certainly be another natural language analysis algorithm.

Step 304: If it is determined that in the at least one pre-stored event, there is no event matching the telephone number or the account of the message, automatically reply with preset content or skip replying to the message.

For the preset content in step 304, refer to the description in the embodiment shown in FIG. 2A, and details are not described herein again.

According to this solution, a message of an application is automatically replied to, it is determined in the auto-response whether reply content satisfies permission of a participant, and when the reply content satisfies the permission of the participant, the application message is automatically replied to with the reply content, or when the reply content does not satisfy the permission of the participant, the application message is automatically replied to with the preset content, to distinguish between permission of different participants, and provide different reply content for the participants according to different permission, thereby effectively protecting user privacy.

According to the method provided in the still another embodiment of this application, after a message of an application is received, a telephone number or an account of the message is matched with a pre-stored event, and if it is determined that the telephone number or the account matches an event, the message is automatically replied to according to permission corresponding to the telephone number or the account. By means of the technical solution, the message is automatically replied to, and different permission can be provided for different participants, so that a problem of dynamically adjusting permission of a participant is resolved, and user privacy is protected when a message is automatically replied to.

Yet another embodiment of this application provides a portable electronic device. The portable electronic device includes:
one or more processors, a memory, a bus system, a transceiver, and one or more programs, where the processor, the memory, and the transceiver are connected by using the bus system; and
the one or more programs are stored in the memory, the one or more programs include an instruction, and when the instruction is executed by the portable electronic device, the portable electronic device executes the method according to the another embodiment or the still another embodiment.

Still yet another embodiment of this application further provides a computer readable storage medium storing one or more programs. The one or more programs include an instruction, and when the instruction is executed by the portable electronic device, the portable electronic device executes the method according to the another embodiment or the still another embodiment.

An additional embodiment of this application provides a graphical user interface on a portable electronic device. The portable electronic device includes a display, a memory, multiple application programs, and one or more processors that are configured to execute one or more programs stored in the memory, the graphical user interface includes the user interface displayed in the method according to the another embodiment or the still another embodiment, and the display includes a touch-sensitive surface and a display screen.

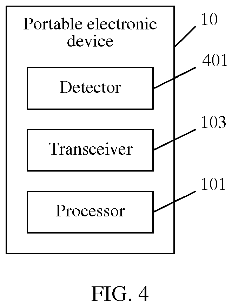

A further embodiment of this application provides a portable electronic device. As shown in FIG. 4, the portable electronic device includes a detector 401, the transceiver 103, and the processor 101. Certainly, in another implementation manner of the portable electronic device, the detector, the transceiver, and the processor may be replaced with other units (for example, the detector is replaced with a detection unit, the transceiver is replaced with a transceiver unit, and the processor is replaced with a processing unit). When the portable electronic device receives a phone call, the detector 401 of the portable electronic device is configured to detect the incoming phone call; the processor 101 is configured to automatically answer the phone call, and perform step 202, step 203, step 204, and the solution of the embodiment shown in FIG. 2A.

When the portable electronic device receives a message of an application, the transceiver 103 is configured to receive the message of the application, and the processor 101 is configured to obtain information about the message and perform step 302, step 303, step 304, and the solution of the embodiment shown in FIG. 3A.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What are disclosed above are merely exemplary embodiments of the present invention, and certainly are not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. A method, wherein the method is applied to a portable electronic device, and the method comprises:
detecting an incoming telephone call;
automatically answering the phone call;
determining that in at least one pre-stored event, there is an event matching a telephone number of the phone call, wherein the event comprises: at least one of content of the event, a starting time of the event, or a location of the event, contact information of a participant, and permission of the participant; and the contact information of the participant comprises a telephone number;
obtaining and parsing audio content of the phone call; and
automatically responding to the audio content with response content according to the audio content and permission that corresponds to the telephone number of the phone call.

2. The method according to claim 1, wherein the method further comprises:
determining that in the at least one pre-stored event, there is no event matching the telephone number of the phone call; and
automatically responding with preset content.

3. The method according to claim 1 or 2, wherein the permission of the participant comprises at least one of obtaining a type of information, obtaining content of information, or obtaining a range of information.

4. The method according to any one of claims 1 to 3, wherein the automatically responding to the audio content with response content according to the audio content and permission that corresponds to the telephone number of the telephone call comprises:
determining a participant at least according to a mapping relationship between the telephone number of the telephone call and the contact information of the participant, and determining permission of the participant according to a mapping relationship between the participant and the permission of the participant;
determining the response content for the audio content; and
determining that the response content satisfies the permission of the participant, and automatically responding with the response content; or determining that the response content does not satisfy the permission of the participant, automatically responding with the preset content.

5. The method according to any one of claims 1 to 3, wherein the automatically responding to the audio content with response content according to the audio content and permission that corresponds to the telephone number of the telephone call comprises:
determining a participant at least according to a mapping relationship between the telephone number of the telephone call and the contact information of the participant, and determining permission of the participant according to a mapping relationship between the participant and the permission of the participant; and
determining that a response type of the audio content satisfies the permission of the participant, and automatically responding to the audio content with the response content; or determining that a response type does not satisfy the permission of the participant, and automatically responding with the preset content.

6. A method, wherein the method is applied to a portable electronic device, and the method comprises:
receiving a message of an application, wherein the application comprises one of a short message service, instant messaging, or an email;
obtaining information about the message, wherein the information comprises content of the message, and a telephone number or an account for sending the message;
determining, according to the information, that in at least one pre-stored event, there is an event matching the telephone number or the account of the message, wherein the event comprises:
at least one of a telephone number of a participant or an account of a participant, at least one of a starting time of the event or a location of the event, content of the event, and permission of the participant; and
automatically replying to the message according to permission corresponding to the telephone number or the account of the message, and according to the information.

7. The method according to claim 6, wherein,
determining that in the at least one pre-stored event, there is no event matching the telephone number or the account of the message; and
automatically replying with preset content or skipping replying to the message.

8. The method according to claim 6 or 7, wherein the permission of the participant comprises at least one of obtaining a type of information, obtaining content of information, or obtaining a range of information.

9. The method according to claim 6, wherein the automatically replying to the message according to permission corresponding to the telephone number or the account of the message, and according to the information comprises:
determining the permission corresponding to the telephone number or the account of the message, according to a mapping relationship between the telephone number or the account of the message and the permission of the participant; and
determining that reply content for the message satisfies the permission corresponding to the telephone number or the account of the message, and automatically replying with the reply content; or determining that reply content does not satisfy the permission corresponding to the telephone number or the account of the message, and automatically replying with preset content or skipping replying to the message.

10. The method according to claim 6, wherein the automatically replying to the message according to permission corresponding to the telephone number or the account of the message, and according to the information comprises:
determining the permission corresponding to the telephone number or the account of the message, according to a mapping relationship between the telephone number or the account of the message and the permission of the participant; and
determining that a reply type of the message satisfies the permission corresponding to the telephone number or the account of the message, and automatically replying with reply content for the message; or determining that a reply type does not satisfy the permission corresponding to the telephone number or the account of the message, and automatically replying with preset content or skipping replying to the message.

11. A portable electronic device, wherein the portable electronic device comprises:
a detector, configured to detect an incoming phone call;
a processor, configured to: automatically answer the phone call; determine that in at least one pre-stored event, there is an event matching a telephone number of the phone call, wherein the event comprises: at least one of content of the event, a starting time of the event, or a location of the event, contact information of a participant, and permission of the participant; and the contact information of the participant comprises a telephone number; obtain and parse audio content of the phone call; and automatically respond to the audio content with response content according to the audio content and permission that corresponds to the telephone number of the phone call.

12. The portable electronic device according to claim 11, wherein the processor is further configured to: determine that in the at least one pre-stored event, there is no event matching the telephone number of the phone call, and automatically respond with preset content.

13. The portable electronic device according to claim 11, wherein the permission of the participant comprises at least one of obtaining a type of information, obtaining content of information, or obtaining a range of information.

14. The portable electronic device according to any one of claims 11 to 13, wherein the processor is configured to: determine a participant at least according to a mapping relationship between the telephone number of the telephone call and the contact information of the participant, and determine permission of the participant according to a mapping relationship between the participant and the permission of the participant; determine the response content for the audio content; and determine that the response content satisfies the permission of the participant, and automatically respond with the response content; or determine that the response content does not satisfy the permission of the participant, and automatically respond with the preset content.

15. The portable electronic device according to any one of claims 11 to 13, wherein the processor is configured to: determine a participant at least according to a mapping relationship between the telephone number of the telephone call and the contact information of the participant, and determine permission of the participant according to a mapping relationship between the participant and the permission of the participant; and determine that a response type of the audio content satisfies the permission of the participant, and automatically respond with the response content; or determine that the response type does not satisfy the permission of the participant, and automatically respond with the preset content.

16. A portable electronic device, wherein the portable electronic device comprises:
a transceiver, configured to receive a message of an application, wherein the application comprises one of a short message service, instant messaging, or an email;
a processor, configured to: obtain information about the message, wherein the information comprises: content of the message, and a telephone number or an account for sending the message; determine, according to the information, that in at least one pre-stored event, there is an event matching the telephone number or the account of the message, wherein the event comprises: at least one of a telephone number of a participant or an account of a participant, at least one of a starting time of the event or a location of the event, content of the event, and permission of the participant; and automatically reply to the message according to permission corresponding to the telephone number or the account of the message, and according to the information.

17. The portable electronic device according to claim 16, wherein the processor is further configured to: determine that in the at least one pre-stored event, there is no event matching the telephone number or the account of the message; and automatically reply with preset content or skip replying to the message.

18. The portable electronic device according to claim 16 or 17, wherein the permission of the participant comprises at least one of obtaining a type of information, obtaining content of information, or obtaining a range of information.

19. The portable electronic device according to claim 16, wherein the processor is configured to: determine the permission corresponding to the telephone number or the account of the message, according to a mapping relationship between the telephone number or the account of the message and the permission of the participant; and determine that reply content for the message satisfies the permission corresponding to the telephone number or the account of the message, and automatically reply with the reply content; or determine that reply content does not satisfy the permission corresponding to the telephone number or the account of the message, and automatically reply with preset content or skip replying to the message.

20. The portable electronic device according to claim 16, wherein the processor is configured to: determine the permission corresponding to the telephone number or the account of the message, according to a mapping relationship between the telephone number or the account of the message and the permission of the participant; and determine that a reply type of the message satisfies the permission corresponding to the telephone number or the account of the message, and automatically reply with reply content for the message; or determine that a reply type does not satisfy the permission corresponding to the telephone number or the account of the message, and automatically reply with preset content or skip replying to the message.
